Europäisches Patentamt

European Patent Office

Office européen des brevets

(19)

(11) Veröffentlichungsnummer : **0 209 686**
**B1**

(12) **EUROPÄISCHE PATENTSCHRIFT**

(45) Veröffentlichungstag der Patentschrift :
24.01.90

(21) Anmeldenummer : 86107561.2

(22) Anmeldetag : 04.06.86

(51) Int. Cl.⁵ : **F 16 L 55/18, F 16 L 55/16**

(54) **Verfahren und Vorrichtung für die Vorbehandlung einer erdverlegten alten Rohrleitung zum Ersetzen durch eine neue Rohrleitung.**

(30) Priorität : 23.07.85 DE 3526193

(43) Veröffentlichungstag der Anmeldung :
28.01.87 Patentblatt 87/05

(45) Bekanntmachung des Hinweises auf die Patenterteilung : 24.01.90 Patentblatt 90/04

(84) Benannte Vertragsstaaten :
DE FR GB IT NL

(56) Entgegenhaltungen :
EP--A-- 0 053 480
GB--A-- 2 139 938
KIRK-OTHMER: "Encyclopedia of chemical technology", 3. Auflage, Band 15, 1981, page 940, JOHN WILEY & SONS, New York, US

(73) Patentinhaber : Ruhrgas Aktiengesellschaft
Huttropstrasse 60 Postfach 10 32 52
D-4300 Essen 1 (DE)

(72) Erfinder : Masznyik, László
Wachtelstrasse 77
D-4270 Dorsten 1 (DE)

(74) Vertreter : Louis, Walter, Dipl.-Ing. et al
Patentanwälte Dipl.-Ing. Walter Louis Dipl.-Ing. Günter Louis Stubertal 3
D-4300 Essen 1 (DE)

## Beschreibung

Die Erfindung bezieht sich auf ein Verfahren und eine Vorrichtung für die Vorbehandlung einer erdverlegten alten Rohrleitung zum Ersetzen durch eine neue Rohrleitung mittels einer Maulwurfsvorrichtung, die mit angehängter neuer Rohrleitung durch die alte Rohrleitung hindurchgeführt wird und dabei die alte Rohrleitung von innen her durch Druck- und Schlageinwirkung zerbricht und zum Einziehen der neuen Rohrleitung aufweitet.

Aus EP-A-0 053 480 ist es bekannt, eine erneuerungsbedürftige erdverlegte alte Rohrleitung ohne Ausgrabung in der Weise durch eine im Außendurchmesser praktisch gleich große oder größere neue Rohrleitung zu ersetzen, daß die alte Rohrleitung durch eine hindurchgezogene Maulwurfsvorrichtung von innen her zerschlagen und aufgebrochen wird und bis auf den Außendurchmesser der an die Maulwurfsvorrichtung angehängten neuen Rohrleitung aufgeweitet wird. Diese Methode nach der europäischen Offenlegungsschrift ist für Gußrohre bestimmt und anwendbar, die von Hause aus und, wie bei Gußeisen allgemein bekannt, spröde genug sind, um etwa durch einen kräftigen Hammerschlag zerbrochen werden zu können. Es kommen in der Praxis aber auch Fälle vor, bei denen erdverlegte Rohre aus einem zähen Material, wie z. B. aus Stahl oder auch aus Kunststoff bestehen und tunlichst ohne Ausgrabungsarbeiten durch eine im Durchmesser gleich große oder größere und daher nicht in die alte Rohrleitung einziehbare neue Rohrleitung ersetzt werden sollen. Für solche Rohrleitungen ist die Methode der europäischen Offenlegungsschrift bisher ungeeignet gewesen.

Der vorliegenden Erfindung liegt die Aufgabe zugrunde, einen Weg zu finden, auf dem die bekannte Rohrerneuerungsmethode gemäß der europäischen Offenlegungsschrift auch für solche Rohrleitungen angewendet werden kann, die nicht aus sprödbrüchigem Gußeisen, sondern aus einem vergleichsweise zähen, schlagunempfindlichen Material bestehen.

Diese Aufgabe löst das erfindungsgemäße Verfahren in erster Linie dadurch, daß vor dem Hindurchführen der Maulwurfsvorrichtung mit einem durch die alte Rohrleitung hindurchgezogenen Kühlschlitten ein verflüssigtes Gas mit einer bei Atmosphärendruck möglichst niedrigen Siedetemperatur gegen die Rohrwand gesprüht wird und die alte Rohrleitung auf eine zur Kaltversprödung führende Temperatur abgekühlt wird. Durch diese erfindungsgemäße Vorbehandlung vorzugsweise mit flüssigem Stickstoff verspröden auch Rohre aus einem bei Normaltemperaturen zähen Material so weit, daß sie im abgekühlten, kaltversprödeten Zustand durch die Druck- und Schlageinwirkung einer anschließend hindurchgeführten Maulwurfsvorrichtung zerbrochen werden können, um dann im zertrümmerten Zustand zum Einziehen der gleich großen neuen Rohrleitung aufgeweitet werden zu können. Vorteilhafte weitere Ausgestaltungsmerkmale des erfindungsgemäßen Verfahrens sind in den Unteransprüchen angegeben.

Die erfindungsgemäße Vorrichtung zur Lösung der Aufgabe und zur Durchführung der erfindungsgemäßen Verfahrensweise besteht in erster Linie darin, daß ein vor der Maulwurfsvorrichtung durch die alte Rohrleitung hindurchführbarer Kühlschlitten vorgesehen ist, der durch eine in die Rohrleitung eingeführte Versorgungsleitung mit einem Vorratsbehälter für flüssigen Stickstoff oder dergleichen verflüssigtes Gas mit bei Atmosphärendruck möglichst tiefer Siedetemperatur verbunden ist, und daß der Kühlschlitten in etwa radial gerichtete Sprühdüsen zum ringsum verteilten Aussprühen des verflüssigten Gases gegen die Rohrwand aufweist. An den z. B. mit einem Seil durch die alte Rohrleitung hindurchgeführten und in der Seilrichtung durch einen Schlauch mit dem Flüssiggasvorratsbehälter verbundenen Kühlschlitten kann sogleich als Nachläufer die Maulwurfsvorrichtung angehängt sein. Vorteilhafte Ausgestaltungsmerkmale der erfindungsgemäßen Vorrichtung sind in den weiteren Unteransprüchen angegeben.

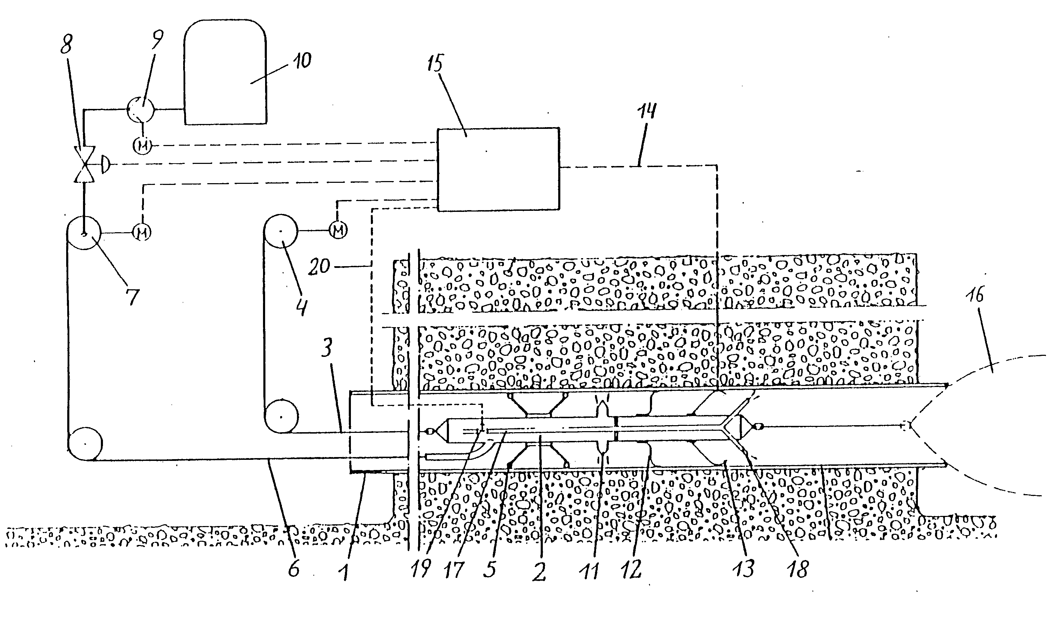

In der Zeichnung ist zum Teil schematisiert ein Ausführungsbeispiel der erfindungsgemäßen Vorrichtung zur Durchführung der erfindungsgemäßen Verfahrensweise dargestellt. Eine unterirdisch verlegte Rohrleitung 1, die durch ein neues Rohr ersetzt werden soll, wird an zwei voneinander entfernten Stellen durch Öffnen von Gräben freigelegt sowie aufgetrennt. In das in der Zeichnungsfigur rechte Rohrende wird ein Kühlschlitten 2 eingeführt, der mittels eines Seiles 3 und einer Seilwinde 4 durch das Rohr zum zum linken Rohrende hindurchgezogen wird. Der Kühlschlitten 2 besitzt Führungsorgane 5, die an der Wandung der Rohrleitung entlangrollen oder entlanggleiten und den Kühlschlitten 2 mit einem ringsum genügend gleichmäßigen radialen Abstand von der Rohrwand abstützen. Der Kühlschlitten 2 ist rohrförmig hohl ausgebildet und an eine Schlauchleitung 6 angeschlossen, die auf eine Schlauchwinde 7 aufwickelbar ist, von der aus der Kühlschlitten 2 über ein Mengenregelventil 8 und eine Pumpe 9 an einen Vorratsbehälter 10 für flüssigen Stickstoff angeschlossen ist. Zweckmäßigerweise in Bewegungsrichtung hinter den Führungsorganen 5 ist der Kühlschlitten 2 mit in etwa radial gerichteten und über den Umfang des Kühlschlittens verteilten Sprühdüsen 11 ausgebildet, mit denen der über die Schlauchleitung 6 dem Kühlschlitten 2 zugeführte flüssige Stickstoff während der Hindurchführung des Kühlschlittens 2 durch die Rohrleitung 1 gegen die Rohrwand ausgesprüht wird. In der Bewegungsrichtung hinter den Sprühdüsen besitzt der Kühlschlitten 2 einen Trennschirm 12, der an der Rohrwand dichtungsartig anliegt und entlanggleitet. Hinter dem Trennschirm 12 besitzt der Kühlschlitten 2 vorzugsweise mehrere an der Rohrwand entlanggleitende Temperaturfühler 13. Der Trennschirm 12 bewirkt, daß die kalten Dämpfe des ausgesprühten und an der Rohrwandung verdampfenden flüssigen Stickstoffs in der Bewegungsrichtung des Kühlschlittens aus der Rohrleitung 1 abströmen und nicht die Temperaturfühler 13 beeinflussen. Die Temperaturfühler 13 sind durch eine vereinfacht dargestellte Steuerleitung 14, die z. B. mit der Schlauchleitung 6 verbunden und mit dieser auf die Schlauchwinde 7 aufwickelbar sein kann, an eine Regel- und Steuereinrichtung 15 angeschlossen. Von dieser Einrichtung 15 werden je nach der von den Temperaturfühlern 13 gemessenen Rohrwandungstemperatur die Seilwinde 4 für die Bewegungsgeschwindigkeit des Kühlschlittens 2, die Schlauchwinde 7, sowie die Pumpe 9 und das Regelventil 8 für die Menge der Zufuhr an flüssigem Stickstoff aus dem Vorratsbehälter 10 zum Kühlschlitten 2 gesteuert.

Die Vorbehandlung der zu ersetzenden alten Rohrleitung 1 mit aufgesprühtem flüssigem Stickstoff, dessen Siedetemperatur bei Atmosphärendruck rund minus 196 °C beträgt, führt durch Abkühlung der unterirdisch verlegten Rohrleitung auf eine genügend tiefe Temperatur zu einer Kaltversprödung des Rohrmaterials. Durch diese Vorbehandlung beziehungsweise Kaltversprödung werden auch solche Rohre durch Schlageinwirkung zerbrechbar, die aus einem bei Normaltemperatur zähen Material wie z. B. Stahl oder auch Kunststoff bestehen, und wird auch für solche Rohre die Anwendung der bekannten Methode möglich gemacht, um alte erdverlegte Rohrleitungen mit einer hindurchgezogenen Maulwurfsvorrichtung von innen her durch Schlag und Druck zu zerbrechen und zum Einziehen von an die Maulwurfsvorrichtung angehängten neuen Rohrleitungen gleichen oder größeren Durchmessers aufzuweiten. Die in der Zeichnung angedeutete Maulwurfsvorrichtung 16 kann sogleich an den Kühlschlitten 2 angehängt sein.

Statt flüssigen Stickstoffs eignete sich auch ein anderes verflüssigtes Gas, sofern dessen Siedetemperatur bei Atmosphärendruck niedrig genug ist, um durch Verdampfung an der Rohrwand eine die Kaltversprödung des Rohrmaterials erzeugende Abkühlung der Rohrwand herbeiführen zu können.

Vorzugsweise führt von dem an die Schlauchleitung 6 angeschlossenen Innenraum des Kühlschlittens 2 eine Leitung 17 zu Zusatzsprühdüsen 18, die an dem Kühlschlitten 2 in dessen Bewegungsrichtung hinter dem Trennschirm 12 angeordnet sind. Die Leitung 17 enthält ein Magnetventil 19, welches in analoger Art wie die Temperaturfühler 13 durch eine elektrische Leitung 20 an die Regel- und Steuereinrichtung 15 angeschlossen ist. Für den Fall eines vorübergehenden Stillstandes des Kühlschlittens 2 mit sogleich angehängter Maulwurfsvorrichtung 16 kann mit Hilfe der Zusatzsprühdüsen 18 der wieder erwärmte Rohrabschnitt zwischen Kühlschlitten und Maulwurfsvorrichtung zur Kaltversprödung abgekühlt werden, um den Brechvorgang mit Hilfe der Maulwurfsvorrichtung fortsetzen zu können.

**Patentansprüche**

1. Verfahren für die Vorbehandlung einer erdverlegten alten Rohrleitung (1) zum Ersetzen durch eine neue Rohrleitung mittels einer Maulwurfsvorrichtung (16), die mit angehängter neuer Rohrleitung durch die alte Rohrleitung (1) hindurchgeführt wird und dabei die alte Rohrleitung (1) von innen her durch Druck- und Schlageinwirkung zerbricht und zum Einziehen der neuen Rohrleitung aufweitet, dadurch gekennzeichnet, daß vor dem Hindurchführen der Maulwurfsvorrichtung (16) mit einem durch die alte Rohrleitung (1) hindurchgezogenen Kühlschlitten (2) ein verflüssigtes Gas mit einer bei Atmosphärendruck möglichst niedrigen Siedetemperatur gegen die Rohrwand gesprüht wird und die alte Rohrleitung (1) auf eine zur Kaltversprödung führende Temperatur abgekühlt wird.

2. Verfahren nach Anspruch 1, dadurch gekennzeichnet, daß flüssiger Stickstoff gegen die Rohrwand gesprüht wird.

3. Verfahren nach Anspruch 1 oder 2, dadurch gekennzeichnet, daß das verflüssigte Gas in der Bewegungsrichtung des Kühlschlittens (2) vor einer Abschirmung (12) zwischen Kühlschlitten (2) und Rohrwand eingesprüht und aus der alten Rohrleitung (1) abgeleitet wird und daß hinter der Abschirmung (12) die Temperatur der Rohrwand gemessen wird und mittels des Meßwertes die Kühlschlittengeschwindigkeit und/oder die auszusprühende Menge an verflüssigtem Gas gesteuert werden.

4. Vorrichtung für die Vorbehandlung einer erdverlegten alten Rohrleitung (1) zum Ersetzen durch eine neue Rohrleitung mittels einer Maulwurfsvorrichtung (16), die mit angehängter neuer Rohrleitung durch die alte Rohrleitung (1) hindurchführbar ist zum Zerbrechen der alten Rohrleitung (1) durch Druck- und Schlageinwirkung von innen her und zum Aufweiten der alten Rohrleitung (1) für das Einziehen der neuen Rohrleitung, dadurch gekennzeichnet, daß ein vor der Maulwurfsvorrichtung (16) durch die alte Rohrleitung (1) hindurchführbarer Kühlschlitten (2) vorgesehen ist, der durch eine in die Rohrleitung (1) eingeführte Versorgungsleitung (6) mit einem Vorratsbehälter (10) für flüssigen Stickstoff oder dergleichen verflüssigtes Gas mit bei Atmosphärendruck möglichst tiefer Siedetemperatur verbunden ist, und daß der Kühlschlitten (2) in etwa radial gerichtete Sprühdüsen (11) zum ringsum verteilten Aussprühen des verflüssigten Gases gegen die Rohrwand aufweist.

5. Vorrichtung nach Anspruch 4, dadurch gekennzeichnet, daß der Kühlschlitten (2) Führungsorgane (5) zur rollenden oder gleitenden Abstützung an der Rohrleitung mit ringsum im wesentlichen gleichem radialen Abstand von der Rohrwand aufweist.

6. Vorrichtung nach Anspruch 4 oder 5, dadurch gekennzeichnet, daß der Kühlschlitten (2) in seiner Bewegungsrichtung hinter den Sprühdüsen (11) einen an der Rohrwand dichtungsartig anliegenden und entlanggleitenden Trennschirm (12) aufweist und hinter dem Trennschirm wenigstens einen an der Rohrwand entlanggleitenden Temperaturfühler (13) besitzt, der durch eine in die Rohrleitung eingeführte Steuerleitung (14) mit einer Regel- und Steuereinrichtung (15) für die Kühlschlittengeschwindigkeit und/oder Mengenzufuhr an verflüssigtem Gas verbunden ist.

**Claims**

1. A method of preparing an existing buried main (1) replacement by a new main by means of a mole device (16) moved through said existing main (1) with the new main clamped to said mole device, said mole device fracturing said existing main (1) by compressive and impact forces and widening the bore thereby created for insertion of said new main characterized in that a liquefied gas having a low boiling point at atmospheric pressure is sprayed against the pipe wall from a cooling sledge (2) pulled through said existing main (1) prior to the movement of said mole device (16) therethrough, thereby reducing the temperature of said existing main (1) to a temperature at which low-temperature embrittlement occurs.

2. A method according to claim 1 characterized in that liquid nitrogen is so sprayed against said pipe wall.

3. A method according to claim 1 or claim 2 characterized in that said liquefied gas is so sprayed against said pipe wall in the direction of travel of said cooling sledge (2) in front of a shield (12) between said cooling sledge (12) and said pipe wall and removed by said shield from said existing main (1) and that the temperature of said pipe wall is measured in the direction of travel of said cooling sledge (2) behind said shield (12) and that the temperature so measured is processed for controlling the speed at which said cooling sledge travels or the rate at which said liquified gas is so sprayed against said pipe wall or both said speed and said rate.

4. A device for preparing an existing buried main (1) for replacement by a new main by means of a mole device (16) movable through said existing main (1) with a new main clamped to said mole device (16), said mole device fracturing said existing main (1) by compressive and impact forces and widening the bore thereby created for insertion of said new main characterized in that a cooling sledge (2) movable through said existing main is provided in front of said mole device (16), said cooling sledge being connected by means of a supply line (16) inserted in said main (1) to a tank (10) containing liquid nitrogen or a similar liquefied gas with a low boiling point at atmospheric pressure and in that said cooling sledge is provided with substantially radially arranged spray nozzles (11) for spraying said liquefied gas against the pipe wall around the entire circumference thereof.

5. A device according to claim 4 characterized in that said cooling sledge (2) is provided with guiding means (5) for supporting the rolling or sliding travel of said cooling sledge on said pipe wall, said means having substantially the same radial distance from said pipe wall around its circumference.

6. A device according to claim 4 or claim 5 characterized in that said cooling sledge (2) is provided with a shield (12) for engaging in a seal-type mode and sliding along said pipe wall, said shield being located behind said spray nozzles (11) in the direction of travel of said cooling sledge, and in that said cooling sledge is provided with at least one temperature sensor (13) sliding on said pipe wall, said at least one temperature sensor being located behind said shield in the direction of travel of said cooling sledge, said at least one temperature sensor being connected by a pilot line (14) inserted in said existing main with a control device (14) for controlling the speed of travel of said cooling sledge or the rate of liquefied gas supply to said cooling sledge or both said speed and said rate.

**Revendications**

1. Procédé de prétraitement d'une vieille canalisation enterrée (1) en vue de son remplacement par une conduite nouvelle, consistant à faire passer par la vieille canalisation (1) un dispositif-taupe (16) auquel la conduite nouvelle est attachée, dispositif qui, lors de son passage, brise la vieille canalisation (1) de l'intérieur par l'effet de forces de compression et de percussion en élargissant le passage de façon à pouvoir y introduire la canalisation nouvelle, caractérisée par le fait qu'avant le passage du dispositif-taupe (16) un gaz liquéfié dont le point d'ébullition à la pression atmosphérique est aussi bas que possible est projeté contre la paroi de la vieille canalisation (1) à partir d'un chariot refroidisseur (2) et refroidit celle-ci jusqu'à une température provoquant sa fragilisation à basse température.

2. Procédé selon la revendication 1, caractérisé par le fait que de l'azote liquide est projeté contre la paroi de la vieille canalisation.

3. Procédé selon l'une quelconque des revendications 1 ou 2, caractérisé par le fait que le gaz liquéfié est projeté dans le sens de passage du chariot (2) entre celui-ci et la paroi, à l'amont d'un écran-séparateur (12), que ce gaz est évacué et qu'en aval de l'écran-séparateur (12) la température de la paroi est mesurée et que la valeur mesurée sert à régler la vitesse de passage du chariot et/ou du débit du gaz liquéfié à projeter.

4. Dispositif pour le prétraitement d'une vieille canalisation enterrée (1) en vue de son remplacement par une conduite nouvelle comportant un dispositif-taupe (16) passant par la vieille canalisation auquel la conduite nouvelle est attachée, dispositif qui, lors de son passage, brise la vieille canalisation (1) de l'intérieur par l'effet des forces de compression et de percussion et élargit le passage de façon à pouvoir y introduire la canalisation nouvelle, caractérisé par le fait que le dispositif-taupe (16) est muni d'un chariot refroidisseur (2) capable de précéder le dispositif-taupe, le chariot étant relié par une conduite d'alimentation (6) insérée dans la canalisation avec un réservoir contenant de l'azote liquide ou un autre gaz liquéfié, dont le point d'ébullition à la pression atmosphérique est le plus bas possible et que le chariot (2) est muni de lances-diffuseurs à disposition pratiquement radiale pour assurer la projection du gaz liquéfié sur toute la surface intérieure de la paroi.

5. Dispositif selon la revendication 4, caractérisé par le fait que le chariot (2) roulant ou glissant le long de la paroi s'appuie sur des guidages (5) assurant au chariot (2) un écartement radial pratiquement identique de tout point de la paroi.

6. Dispositif selon l'une quelconque des revendications 4 ou 5, caractérisé par le fait que le chariot (2) dispose en aval des lances-diffuseurs (11), dans le sens de son passage, d'un écran-séparateur (12) épousant parfaitement la forme de la paroi à la manière d'une étanchéité et glissant le long de la paroi et que le dispositif est équipé en aval de cet écran d'au moins un palpeur de température (13) relié par une conduite de commande (14) introduite dans la canalisation, avec un dispositif de commande et de réglage de la vitesse de passage du chariot (2) et/ou du débit de gaz liquéfié à projeter.

EP 0 209 686 B1